# EUROPÄISCHE PATENTSCHRIFT

(11) **EP 2 910 420 B1**
(45) Veröffentlichungstag und Bekanntmachung des Hinweises auf die Patenterteilung: **24.07.2019**
(21) Anmeldenummer: 15155902.8
(22) Anmeldetag: 20.02.2015
(51) Int. Cl.: B60P 7/08

(54) **Verzurrschiene für die Befestigung von Ladegut**
Lashing rail for fixing loads
Rails d'ancrage pour la fixation de marchandises

(30) Priorität: 21.02.2014 DE 202014100773 U
(43) Veröffentlichungstag der Anmeldung: 26.08.2015
(73) Patentinhaber: Blomberger Holzindustrie GmbH, 32825 Blomberg (DE)
(72) Erfinder: Bentler, Reinhold, 33098 Paderborn (DE); Geise, Olaf, 32816 Schieder-Schwalenberg (DE); Bernd, Unruhe, 33039 Nieheim (DE)
(74) Vertreter: Brandt, Detlef

(56) Entgegenhaltungen:
- EP-A1- 2 116 448
- WO-A1-2006/121398
- DE-A1- 10 110 996
- DE-U1- 9 206 036

## Beschreibung

### Technisches Umfeld

Die Erfindung betrifft eine Verzurrschiene für die Befestigung von Ladegut an einem Transportfahrzeug mittels Fittingelementen, wobei die Verzurrschiene mit einem im Wesentlichen im Querschnitt rechteckförmigen Grundkörper in einer länglich ausgebildeten Nut eines Zusatzladebodens des Transportfahrzeuges angeordnet ist und wobei an der dem Transportfahrzeugfahrgestell zugewandten Unterseite des Grundkörpers längsseitlich vorstehende Klebeschienen festgelegt sind, die in an der Unterseite des Zusatzladebodens eingebrachte Ausnehmungen eingreifen.

### Stand der Technik

Verzurrschienen der eingangs geschilderten gattungsgemäßen Art sind seit längerem aus dem Stand der Technik bekannt und werden in zahlreichen Bereichen der Technik wie auch beispielsweise im Fahrzeugbau eingesetzt.

Es ist bei Nutzfahrzeugen allgemein üblich, diese nachträglich mit Zusatzladeböden im Transportraum zu versehen. Diese Zusatzladeböden haben die Funktion, eine ebene Ladefläche auf den oftmals vorhandenen Sickenblechen der Karosserie zu bilden und darüber hinaus die Ladefläche vor Beschädigungen zu schützen. Zusätzlich werten sie das Fahrzeug optisch auf und können bei Beschädigungen oder Verschleiß leicht ausgetauscht oder nach Ende der Leasingzeit des Fahrzeuges ganz entfernt werden.

Beim Einsatz derartiger Zusatzladeböden muss gewährleistet sein, dass die in den Zusatzladeböden angeordneten Verzurrschienen prinzipiell gleiche Kräfte aus den Ladesicherungsmitteln aufnehmen können wie dies die serienmäßig bei den Nutzfahrzeugen herstellerseitig bereits vorgesehenen Befestigungspunkte gewährleisten. Es ist somit notwendig, bei der Verwendung von Zurrgurten und Sperrstangen, die in die Verzurrschienen eingeklinkt oder an diesen mittels Fittings festgelegt werden, eine problemlose Kraftübertragung von diesen Elementen in die Verzurrschiene, von der Verzurrschiene in die Zusatzbodenplatte und von der Zusatzbodenplatte auf die entsprechenden Verankerungsmittel am Fahrzeugboden zu gewährleisten.

Im Hinblick auf das technische Umfeld der Erfindung ist als gattungsbildender Stand der Technik beispielsweise eine Verzurrschiene gemäß der DE 101 10 996 A1 bekannt. Dort ist eine Verzurrschiene für die Befestigung von Ladegut an einem Transportfahrzeug offenbart, die die gattungsbildenden Merkmale des Anspruches 1 aufweist.

In der EP 2 116 448 A1 wird das Paneel für einen Kofferaufbau mit einer Schiene zur Befestigung von Zusatzeinrichtungen beschrieben, wobei die Schiene mittels eines Klebstoffes über eine stoffschlüssige Verbindung an dem Paneel fixiert ist. In den Seitenwandungen der Schiene sind dabei Taschen eingelassen, so dass eine erhöhte Menge Klebstoff die Verbindung zwischen Schiene und Seitenwandpaneel gewährleisten kann.

### Aufgabe der Erfindung

Ausgehend von den aus dem Stand der Technik bekannten Lösungen für eine ausreichende Kraftübertragung einer in einem Fahrzeugboden angeordneten Verzurrschiene ist es Aufgabe der vorliegenden Erfindung, eine derartige Verzurrschiene so weiter zu entwickeln, dass sie auf konstruktiv einfache Weise und somit kostengünstig eine gesteigerte Kraftübertragung von den im Nutzfahrzeugbau eingesetzten Ladesicherungsmitteln auf die Karosserie des Nutzfahrzeuges zu gewährleisten.

### Lösung der Aufgabe

Die geschilderte Aufgabe wird unter Zugrundelegung der Merkmale einer eingangs geschilderten gattungsgemäßen Verzurrschiene durch die im kennzeichnenden Teil des Anspruches 1 geschilderte technische Lehre gelöst.

Erfindungswesentlich dabei ist es, dass die an der Verzurrschiene angeordneten seitlichen Klebeschienen mindestens zwei nebeneinander angeordnete Klebenuten aufweisen, die in ihrer Gesamtbreite im Wesentlichen mindestens der Breite des Grundkörpers der Verzurrschiene entsprechen. Durch die geschilderte Maßnahme kann in die Klebenuten eine ausreichende Menge Klebstoffmasse eingebracht werden, so dass eine kraftschlüssige Verklebung der Verzurrschiene an der korrespondierenden Zusatzbodenplatte zur ausreichenden Kraftübertragung gewährleistet ist. Erfindungswesentlich ist zusätzlich, dass bei besonders hohen Anforderungen an die Kraftübertragung von den Befestigungssystemen auf die Verzurrschiene und die Fahrzeugkarosserie in den Endbereichen der Verzurrschiene im wesentlichen rechtwinklig zur Längsachse der Verzurrschiene angeordnete Stabilisierungselemente angeordnet sind, welche an der Verzurrschiene festgelegt werden.

Die Klebenuten weisen dabei vorteilhafterweise eine Tiefe im Bereich von 1 - 4 mm auf und werden entsprechend der Vorgabe des Herstellers der verwendeten Klebemasse ausgebildet. Die Breite der Klebenuten ist dabei wesentlich für eine ausreichende Kraftübertragung.

Die einzelnen Klebenuten der Klebeschiene werden zweckmäßigerweise dabei durch nach oben vorstehende Stege seitlich begrenzt, so dass eine zuverlässige Einfüllung der Klebemasse in die Klebenuten gewährleistet werden kann.

Klebeschienen und Grundkörper werden vorteilhaft in einem Strangpressverfahren einstückig aus Aluminium hergestellt, da dies eine besonders kostengünstige Herstellungsmethode ist, wobei gleichzeitig die auftretenden Fertigungstoleranzen gering gehalten werden können.

Eine Festlegungsart zwischen Verzurrschiene Stabilisierungselementen kann dabei eine Verschraubung der miteinander verbundenen Elemente sein. Die Stabilisierungselemente sind dabei in korrespondierende Ausnehmungen im Zusatzladeboden des Transportfahrzeuges eingelassen, wobei sie aus ästhetischen Gründen von der Oberseite des Zusatzladebodens unsichtbar sind. Für eine ausreichende zusätzliche Kraftübertragung hat es sich als vorteilhaft erwiesen, wenn die Länge der Stabilisierungselemente im Bereich der drei- bis sechsfachen Breite der Verzurrschiene mit den daran seitlich angeordneten Klebeschienen liegt.

### Figurenbeschreibung

Im Folgenden wird ein Ausführungsbeispiel des Gegenstandes der Erfindung anhand der beigefügten Zeichnungen näher erläutert.

Es zeigt:
- Figur 1: einen Querschnitt durch eine erfindungsgemäße Verzurrschiene, eingebaut in den Zusatzladeboden eines Transportfahrzeuges und
- Figur 2: eine Unteransicht der Verzurrschiene aus Figur 1 entsprechend dem Pfeil P

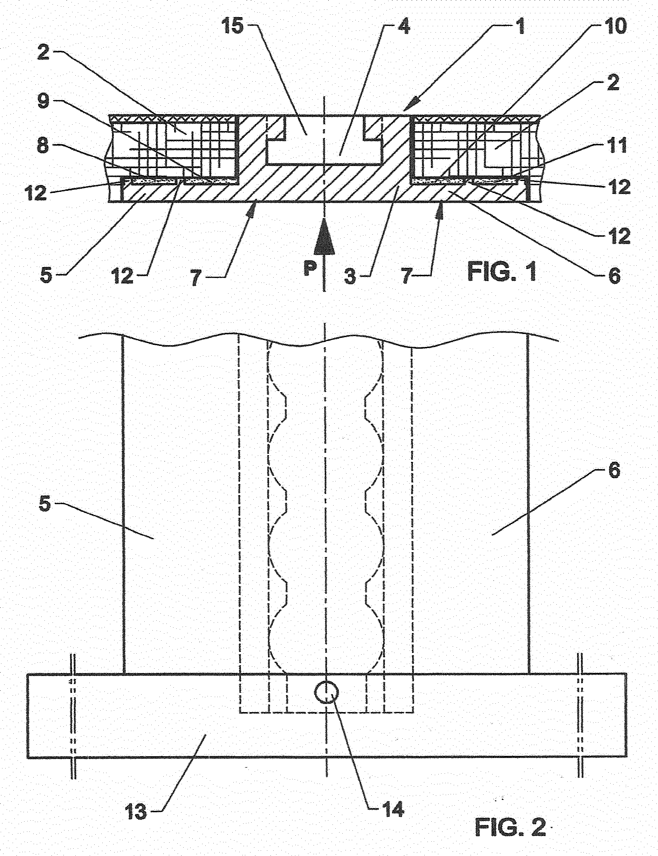

In der Figur 1 ist eine erfindungsgemäße Verzurrschiene, insgesamt mit der Bezugsziffer 1 bezeichnet, zwischen zwei Teilen eines Zusatzladebodens 2 dargestellt. Zusatzladeböden 2 werden beispielsweise in Transportfahrzeugen eingebaut und bedecken hier üblicherweise den regelmäßig mit Sicken versehenen Originalladeboden des Transportfahrzeuges. Die Zusatzladeböden 2 sind üblicherweise aus Kunststoff oder Sperrholz, vorzugsweise aus Buchenholz gefertigt und können - je nach Transportfahrzeugtyp als Originalausbauteile der Fahrzeughersteller oder aber als Nachrüstlösung für einen nachträglichen Einbau bzw. für einen Austausch beschädigter Erstausrüsterware bereitgestellt werden.

In einem derartigen Zusatzladeboden 2 sind zum Zwecke der Ladungssicherung üblicherweise Verzurrschienen 1 eingesetzt, die entweder im Trennbereich zweier Zusatzladebodenplatten oder innerhalb einer Platte in einer Längsnut 4 eingesetzt sind. Die Verzurrschienen 1 besitzen eine Reihe von zur Oberseite geöffneten hinterschnittenen Ausnehmungen 15, in die sogenannte Fittings zur Verbindung mit Zurrgurten Befestigung von Ladegut oder Sperrstangen zur Abgrenzung bestimmter Transportbereiche einsetzbar sind.

Aus Gründen der Übersichtlichkeit ist in der Figur 1 auf die Darstellung derartiger Befestigungsmittel verzichtet worden, da sie zum einen nicht Gegenstand der Erfindung sind und zum anderen aus dem Stand der Technik hinlänglich bekannt sind.

Die Verzurrschiene 1 weist entsprechend der Darstellung der Figur 1 einen im Querschnitt im wesentlichen rechteckigen mit der Ausnehmung 15 versehenen Grundkörper 3 auf. Im unteren Bereich des Grundkörpers 3 ist dieser beidseitig mit vorstehenden Klebeschienen 5 und 6 versehen, die sich entlang des gesamten Grundkörpers 3 erstrecken und eine wesentlich geringere Höhe als der Grundkörper 3 selbst aufweisen. Die Klebeschienen 5 und 6 sind in Ausnehmungen 7 an der Unterseite des Zusatzladebodens 2 eingelassen, so dass sich insgesamt, wie dies aus der Figur 1 ersichtlich ist, eine einheitliche Höhe des Zusatzladebodens 2 mit der darin eingebauten Verzurrschiene 1 ergibt.

Die erfindungsgemäße Ausgestaltung der Klebeschienen 5 und 6 sieht vor, dass diese an ihrer den Zusatzladeboden 2 zugewandten Oberseite im dargestellten Ausführungsbeispiel mit jeweils zwei Klebenuten 8 und 9 an der Klebeschiene 5 sowie 10 und 11 an der Klebeschiene 6 versehen sind. Die Klebenuten 8, 9, 10 und 11 werden beim Zusammenbau der Verzurrschiene 1 mit dem Zusatzladeboden 2 mit Klebstoffmasse gefüllt, so dass eine sichere und ausreichende Anlage des Klebstoffes und ebenso eine gewisse Dicke der Klebstoffschicht gewährleistet ist. Die Tiefe der entsprechenden Klebenuten 8, 9, 10 und 11 liegt im Bereich von 1 - 4 mm und wird entsprechend den Vorgaben des Klebstoffherstellers gewählt.

Zwischen den Klebenuten 8 und 9 sowie an der Außenseite der Klebenut 8 sowie auf der gegenüberliegenden Seite zwischen den Klebenuten 10 und 11 sowie an der Außenkante der Klebenut 11 sind jeweils längs verlaufende Stege 12 angeordnet. Diese Stege unterstützen einen ausreichenden und gleichmäßigen Klebstoffeintrag in die Klebenuten 8, 9, 10 und 11.

Bei üblicher oder gesteigerter Beanspruchung reicht die neuartige Gestaltung der Klebeschienen 5 und 6 aus, um einen ausreichenden Kraftschluss von der Verzurrschiene 1 in die Zusatzladebodenplatte 2 zu gewährleisten.

Für extreme Anforderungen kann es darüber hinaus zweckmäßig sein, die Verzurrschiene entsprechend eine vorteilhaften Ausbildung der Erfindung zusätzlich mit Stabilisierungselementen 13 zu versehen. Diese Stabilisierungselemente 13 werden an den beiden gegenüberliegenden Enden einer Verzurrschiene 1 angeordnet und weisen eine im Grundriss längs erstreckte rechteckförmige Gestalt auf. Die Länge der Stabilisierungselemente ist dabei so gewählt, dass sie mindestens mit einem Breitenmaß, welches der Verzurrschiene 1 insgesamt entspricht, jeweils seitlich über diese hervorstehen. Mittels einer Bohrung 14 werden die Stabilisierungselemente 13 mit dem Grundkörper 3 der Verzurrschiene 1 verbunden, so dass ein entsprechender Kraftübergang sichergestellt ist.

Natürlich ist es auch denkbar, statt einer Verschraubung mittels der Bohrung 14 auch eine Verschweißung oder sonstige dauerhafte Verbindung zwischen Stabilisierungselement 13 und Verzurrschiene 1 herbeizuführen. Je nach technischer Anforderung kann natürlich die Länge der Stabilisierungselemente 13 auch größer sein und im Bereich der 3- bis 6fachen Breite der Verzurrschiene liegen.

Für den Fall, dass die Verzurrschienen 1 zusätzlich mit entsprechenden Stabilisierungselementen 13 versehen werden, sind diese in korrespondierende zusätzliche Ausnehmungen an der Unterseite des Zusatzladebodens eingelassen, so dass sich insgesamt ebenfalls eine plan verlaufende Unterseite des Zusatzladebodens 2 ergibt.

### Bezugszeichenliste:

- 1.: Verzurrschiene
- 2.: Zusatzladeboden
- 3.: Grundkörper
- 4.: Nut
- 5.: Klebeschiene
- 6.: Klebeschiene
- 7.: Ausnehmung
- 8.: Klebenut
- 9.: Klebenut
- 10.: Klebenut
- 11.: Klebenut
- 12.: Steg
- 13.: Stabilisierungselement
- 14.: Bohrung
- 15.: Ausnehmung

## Patentansprüche

1. Verzurrschiene (1) für die Befestigung von Ladegut an einem Transportfahrzeug mittels Fittingelementen, wobei die Verzurrschiene (1) mit einem im wesentlichen im Querschnitt rechteckförmigen Grundkörper (3) in einer länglich ausgebildeten Nut (4) eines Zusatzladebodens (2) des Transportfahrzeuges angeordnet ist, **dadurch gekennzeichnet, dass** an der dem Transportfahrzeugfahrgestell zugewandten Unterseite des Grundkörpers (3) längsseitlich vorstehende Klebeschienen (5, 6) festgelegt sind, die in an der Unterseite des Zusatzladebodens (2) eingebrachte Ausnehmungen (7) eingreifen, wobei die Klebeschienen (5, 6) mindestens zwei nebeneinander angeordnete Klebenuten (8, 9, 10, 11) aufweisen, die in ihrer Gesamtbreite im wesentlichen mindestens der Breite des Grundkörpers (3) der Verzurrschiene (1) entsprechen und wobei in den Endbereichen der Verzurrschiene (1) im wesentlichen rechtwinklig zur Längsachse der Verzurrschiene (1) angeordnete Stabilisierungselemente (13) angeordnet sind, welche an der Verzurrschiene (1) festgelegt sind.

2. Verzurrschiene nach Anspruch 1,
**dadurch gekennzeichnet, dass**
die Klebenuten (8, 9, 10, 11) eine Tiefe im Bereich von 1 - 4 mm aufweisen.

3. Verzurrschiene nach einem der Ansprüche 1 oder 2,
**dadurch gekennzeichnet, dass**
die Klebenuten (8, 9, 10, 11) durch seitlich nach oben vorstehende Stege (12) begrenzt sind.

4. Verzurrschiene nach einem der Ansprüche 1 bis 3,
**dadurch gekennzeichnet, dass**
die Klebeschienen (5, 6) und der Grundkörper (3) einstückig aus Aluminium im Strangpressverfahren hergestellt sind.

5. Verzurrschiene nach Anspruch 1,
**dadurch gekennzeichnet, dass** die Verzurrschiene (1) und die Stabilisierungselemente (13) miteinander verschraubt sind.

6. Verzurrschiene nach einem der Ansprüche 1 oder 5,
**dadurch gekennzeichnet, dass**
die Stabilisierungselemente (13) in korrespondierenden Ausnehmungen (15) im Zusatzladeboden (2) des Transportfahrzeuges eingelassen sind.

7. Verzurrschiene nach einem der Ansprüche 1 bis 6,
**dadurch gekennzeichnet, dass**
die Länge der Stabilisierungselemente (13) im Bereich der 3- bis 6fachen Breite der Verzurrschiene (1) liegt.

## Claims

1. Lashing rail (1) for fastening loaded goods on a transport vehicle by means of fitting elements, wherein the lashing rail (1) is arranged with a base body (3), substantially rectangular in cross-section, in a longitudinally formed groove (4) of an additional loading base (2) of the transport vehicle, **characterised in that** longitudinally protruding adhesive rails (5, 6) are fixed to the underside of the base body (3) facing the transport vehicle chassis, said adhesive rails engaging into recesses (7) introduced on the underside of the additional loading base (2), wherein the adhesive rails (5, 6) have at least two adhesive grooves (8, 9, 10, 11) arranged adjacent to one another, which correspond over their entire width substantially at least to the width of the base body (3) of the lashing rail (1) and wherein stabilising elements (13) arranged substantially at right angles to the longitudinal axis of the lashing rail (1) are arranged in the end regions of the lashing rail (1), said stabilising elements being fixed to the lashing rail (1).

2. Lashing rail according to claim 1, **characterised in that** the adhesive grooves (8, 9, 10, 11) have a depth in the range of 1 to 4 mm.

3. Lashing rail according to any one of claims 1 or 2, **characterised in that** the adhesive grooves (8, 9, 10, 11) are delimited by webs (12) protruding laterally upwards.

4. Lashing rail according to any one of claims 1 to 3, **characterised in that** the adhesive rails (5, 6) and the base body (3) are manufactured integrally from aluminium in the extrusion process.

5. Lashing rail according to claim 1, **characterised in that** the lashing rail (1) and the stabilising elements (13) are screwed together.

6. Lashing rail according to any one of claims 1 or 5, **characterised in that** the stabilising elements (13) are embedded into corresponding recesses (15) in the additional loading base (2) of the transport vehicle.

7. Lashing rail according to any one of claims 1 to 6, **characterised in that** the length of the stabilising elements (13) is in the range of 3 to 6 times the width of the lashing rail (1).

## Revendications

1. Rail d'ancrage (1) pour la fixation d'un chargement à un véhicule de transport au moyen d'éléments à raccords, dans lequel le rail d'ancrage (1) avec un corps de base (3) sensiblement de forme rectangulaire dans la section transversale est disposé dans une rainure (4) réalisée en longueur d'un plancher de chargement supplémentaire (2) du véhicule de transport, **caractérisé en ce que** sont immobilisés, au niveau du côté inférieur, tourné vers le châssis de véhicule de transport, du corps de base (3), des rails d'encollage (5, 6) faisant saillie latéralement par rapport à la longueur, qui viennent en prise avec des évidements (7) pratiqués au niveau du côté inférieur du plancher de chargement supplémentaire (2),
dans lequel les rails d'encollage (5, 6) présentent au moins deux rainures d'encollage (8, 9, 10, 11) disposées côte à côte, qui correspondent, dans la totalité de leur largeur, sensiblement au moins à la largeur du corps de base (3) du rail d'ancrage (1), et
dans lequel sont disposés, dans les zones d'extrémité du rail d'ancrage (1), des éléments de stabilisation (13), qui sont disposés sensiblement à angle droit par rapport à l'axe longitudinal du rail d'ancrage (1) et qui sont immobilisés au niveau du rail d'ancrage (1).

2. Rail d'ancrage selon la revendication 1,
**caractérisé en ce que**
les rainures d'encollage (8, 9, 10, 11) présentent une profondeur dans la plage de 1 - 4 mm.

3. Rail d'ancrage selon l'une quelconque des revendications 1 ou 2,
**caractérisé en ce que**
les rainures d'encollage (8, 9, 10, 11) sont délimitées par des entretoises (12) faisant saillie latéralement vers le haut.

4. Rail d'ancrage selon l'une quelconque des revendications 1 à 3,
**caractérisé en ce que**
les rails d'encollage (5, 6) et le corps de base (3) sont fabriqués d'un seul tenant à partir d'aluminium dans le procédé d'extrusion.

5. Rail d'ancrage selon la revendication 1,
**caractérisé en ce que**
le rail d'ancrage (1) et les éléments de stabilisation (13) sont vissés les uns aux autres.

6. Rail d'ancrage selon l'une quelconque des revendications 1 ou 5,
**caractérisé en ce que**
les éléments de stabilisation (13) sont placés dans des évidements (15) correspondants dans le plancher de chargement supplémentaire (2) du véhicule de transport.

7. Rail d'ancrage selon l'une quelconque des revendications 1 à 6,
**caractérisé en ce que**
la longueur des éléments de stabilisation (13) se situe dans la plage de 3 à 6 fois la largeur du rail d'ancrage (1).
